# EUROPÄISCHE PATENTSCHRIFT

(11) **EP 0 887 972 B1**
(45) Veröffentlichungstag und Bekanntmachung des Hinweises auf die Patenterteilung: **10.08.2005**
(21) Anmeldenummer: 98109560.7
(22) Anmeldetag: 26.05.1998
(51) Int. Cl.: H04L 12/56

(54) **Verfahren und Anordnung zur Vermittlung von paketorientierten Datenströmen in einer Vermittlungseinheit**
Method and system to switch a packet oriented data stream in a switch unit
Procédure et dispositif pour commuter un flux des données des paquets dans une unité de commutation

(30) Priorität: 25.06.1997 DE 19727055
(43) Veröffentlichungstag der Anmeldung: 30.12.1998
(73) Patentinhaber: SIEMENS AKTIENGESELLSCHAFT, 80333 München (DE)
(72) Erfinder: Hünlich, Klaus, 85467 Neuching (DE)

(56) Entgegenhaltungen:
- EP-A- 0 537 743
- EP-A- 0 724 374
- JP-A- 4 316 241
- US-A- 5 381 410
- US-A- 5 452 330
- FAYET C ET AL: "HIGH SPEED SWITCHING FOR ATM: THE BSS" COMPUTER NETWORKS AND ISDN SYSTEMS, NORTH HOLLAND PUBLISHING. AMSTERDAM, NL, Bd. 26, Nr. 9, 1. Mai 1994 (1994-05-01), Seiten 1225-1233, XP000445891 ISSN: 0169-7552

## Beschreibung

In der nach dem Asynchronen Transfer Modus - ATM - konzipierten Vermittlungstechnik werden bei einem Verbindungsaufbau vor Beginn der Nutzdatenübertragung in einem ATM-Kommunikationsnetz durch Austausch von Signalisierungsinformationen oder durch Administration Verbindungstabellen mit aus virtueller-Kanal-Identifizierung - im weiteren auch mit VCI bezeichnet - und aus virtueller-Pfad-Identifizierung - im weiteren mit VPI bezeichnet - bestehenden Vermittlungs- bzw. Routing-Informationen in den jeweiligen ATM-Vermittlungseinheiten eingerichtet. In den Verbindungstabellen ist der Virtuellen-Kanal-Identifizierung und der Virtuellen-Pfad-Identifizierung jeweils ein VCI-Wert und ein VPI-Wert zugewiesen. Durch die in die Verbindungstabellen eingetragenen Vermittlungsdaten bzw. Routing-Informationen ist festgelegt, wie die virtuellen Pfade bzw. in den virtuellen Pfaden enthaltenen virtuellen Übertragungskanäle der an der ATM-Vermittlungseinheit ein- und ausgehenden Verbindungen durch die Signalisierung einander zugeordnet sind, d.h. welcher Eingang mit welchem Ausgang vermittlungstechnisch verknüpft ist. Über diese virtuellen Verbindungen vermittelte, Nutzdaten transportierende ATM-Zellen weisen in einem im Paketkopf bzw. ATM-Zellkopf angeordneten ATM-Zellkopf-Datenfeld aus einem VPI- und einem VCI-Wert bestehende Vermittlungs-Daten auf. Am Eingang einer ATM-Vermittlungseinheit werden die ATM-Zellkopf-Daten bearbeitet, d.h. die darin angeordneten Vermittlungs-Daten erfaßt und bewertet. Anschließend werden die ATM-Zellen anhand des Bewertungsergebnisses bzw. gemäß den in der Verbindungstabelle gespeicherten Routing-Informationen durch das in der ATM-Vermittlungseinheit angeordnete, aus einem oder mehreren Koppelelementen bestehende Koppelnetz zu einem, ein bestimmtes Ziel repräsentierenden Ausgang vermittelt.

Gemäß der Druckschrift "ATM-Networks, Concepts, Protocolls, Applications, Reiner Händel, Manfred M. Huber and Stefan Schröder, Adison-Wesley publishing company, 1994, Seite 180-183" sind für die Vermittlung von ATM-Zellen innerhalb eines Koppelnetzes zwei verschiedene Verfahren bekannt. Bei einem Tabellen-gesteuerten Koppelnetz wird beim Verbindungsaufbau jedem Koppelelement eine Tabelle zugeordnet, dessen Einträge neben einem VPI- und einem VCI-Wert auch die Bezeichnung des entsprechenden Koppelelement-Ausgangs - üblicher Weise eine numerische Information - aufweisen. Beim Durchlaufen der ATM-Zellen durch das Koppelfeld bzw. durch die angesteuerten Koppelelemente werden durch in den Koppelelementen implementierte ATM-Zellkopf-Bearbeitungsprozesse, die in den ATM-Zellköpfen übertragenen VPI- und VCI-Werte durch entsprechende, in der Verbindungstabelle abgespeicherte VPI- und VCI-Werte ersetzt und die ATM-Zelle zu dem ebenfalls in der Tabelle angegebenen Koppelelement-Ausgang vermittelt.

Bei einem selbstvermittelnden Koppelnetz findet die Bearbeitung nur am Eingang der ATM-Vermittlungseinheit statt. Im Gegensatz zum Tabellen-gesteuerten Koppelnetz findet in den Koppelelementen selbst keine Zellkopf-Bearbeitung statt. Jeder zu vermittelnden ATM-Zelle wird durch Anfügen von zusätzlichen, Koppelfeld-spezifischen Vermittlungsdaten bzw. Routing-Informationen in einem zusätzlichen Zellkopf - auch als interner Header bezeichnet - der Weg durch das Koppelfeld vorgegeben, wobei weitere bzw. folgende, die selben Vermittlungsdaten aufweisenden ATM-Zellen auf unterschiedlichen Wegen, d.h. über unterschiedliche Koppelelemente des Koppelfeldes an den Ziel-Ausgang der ATM-Vermittlungseinheit vermittelt werden können.

Einige ATM-Vermittlungseinheiten unterstützen die gleichzeitige Vermittlung von eingehenden ATM-Zellen an mehrere Ziele - auch als Point-to-Multipoint-Communication oder Multicast bezeichnet. Hierzu werden in der ATM-Vermittlungseinheit bzw. in den darin angeordneten Koppelelementen mittels einer eine Multicast-Funktion realisierenden Routine Kopien von eingehenden ATM-Zellen generiert und an die entsprechenden Ausgänge vermittelt.

In EP 0724 374 ist eine ATM-Netzwerkkontrolleinrichtung beschrieben, bei der ATM-Zellen über eine ATM-Anschlußeinrichtung empfangen, die empfangenen ATM-Zellen komplett, d.h. Nutzdatenfeld einschließlich Zellkopf, über ein in der ATM-Netzwerkkontrolleinrichtung angeordnetes Bussystem an eine Ziel-Anschlußeinrichtung übermittelt und von dieser weitervermittelt werden.

In der Druckschrift "High speed switching for ATM: the BSS", Fayet C et al, Computer Networks and ISDN Systems, North Holland Publishing, Amsterdam, NL, Bd. 26, Nr. 9, 1.Mai 1994 (1994-05-01), Seiten 1225-1233, XP000445891 ISSN 0169-7552, ist ebenfalls die Vermittlung von kompletten ATM-Zellen über ein Bussystem offenbart.

In US 5,452,330 ist eine gemäß dem asynchronen Transfermodus ausgestaltete, busorientierte Vermittlungseinrichtung beschrieben, bei der der Zugriff mehrer Schnittstellen auf den Bus zur Übermittlung kompletter ATM-Zellen durch eine zentrale Steuerungsvorrichtung geregelt wird.

Um ein blockierungsfreies Vermitteln von aus ATM-Zellen bestehenden Datenströmen über ein ATM-Koppelfeld zu gewährleisten, muß dieses, d.h. die darin angeordneten Koppelelemente mit hohen Taktraten betrieben werden. Mit zunehmender Taktrate, steigt jedoch der wirtschaftliche Aufwand für die Realisierung des Koppelfeldes.

Der Erfindung liegt die Aufgabe zugrunde, die Vermittlung von paketorientierten, hochbitratigen Datenströmen in einer Vermittlungseinheit, insbesondere die Vermittlung von ATM-Zellen mit hohen Übertragungsraten mit geringstem technischen und wirtschaftlichen Aufwand zu realisieren. Die Aufgabe wird durch die Merkmale der Patentansprüche 1 und 13 gelöst.

Der wesentliche Aspekt des erfindungsgemäßen Verfahrens zur Vermittlung von paketorientierten, Nutzdaten und im Paketkopf eingefügte Vermittlungsdaten aufweisenden Datenströmen in einer zumindest einen Ein- und Ausgang aufweisenden Vermittlungseinheit besteht darin, daß bei an einem Eingang eintreffenden paketorientierten Datenstrom die im Paketkopf der Pakete enthaltenen Vermittlungsdaten erfaßt und bewertet werden und in Abhängigkeit vom Bewertungsergebnis nur die betreffenden Nutzdaten über ein Bussystem an einen Zielausgang der Vermittlungseinheit vermittelt werden.

Der wesentliche Vorteil des erfindungsgemäßen Verfahrens besteht darin, daß im Gegensatz zu bisher realisierten Vermittlungstechniken nur die im paketorientierten Datenstrom enthaltenen Nutzdaten über ein Koppelfeld an zumindest einen Ausgang der Vermittlungseinheit vermittelt werden. Durch die Reduzierung des zu vermittelnden Daten-Volumens auf die Nutzdaten können Teile eines in einer Vermittlungseinheit angeordneten Koppelfeldes, d.h. ein Großteil der Koppelelemente mit niedriger Taktrate, d.h. mit geringerem technischen Aufwand betrieben und somit das Koppelfeld wirtschaftlicher realisiert werden. Dies gilt insbesondere für die Realisierung von Koppelfeldern mit wenigen Ein- und Ausgängen, d.h. insbesondere im Endstellenbereich, welche reine Multiplexerfunktionen ausführen und mittels denen die zu vermittelnden Daten auf die angeschlossenen Teilnehmer verteilt werden.

Vorteilhaft werden in Abhängigkeit vom Auswertungsergebnis die betreffenden Nutzdaten an mehrere Ziel-Ausgänge der Vermittlungseinheit vermittelt - Anspruch 2. Durch diese voteilhafte Ausgestaltung wird die Verbreitung von Multicast-Nachrichten über das wirtschaftlich günstig realisierbare Koppelfeld unterstützt.

Nach einer weiteren vorteilhaften Ausgestaltung werden bei einem, an einem Eingang der Vermittlungseinheit eintreffenden, seriellen, paketorientierten Datenstrom die Nutzdaten seriell/parallel umgewandelt und parallel an den betroffenen Ausgang vermittelt - Anspruch 4. Durch die seriell/parallel-Wandlung wird eine Parallelisierung des zu vermittelnden Datenstromes erreicht, wodurch die Taktrate, mit welcher das Koppelfeld getaktet wird, erheblich reduziert werden kann. Bei Bedarf, d.h. je nach Art der an die Ausgänge des Koppelfeldes angeschlossenen Kommunikationsendgeräte werden die parallel an einen Ausgang der Vermittlungseinheit vermittelten Nutzdaten anschließend parallel/seriell rückgewandelt - Anspruch 5.

In Abhängigkeit vom Auswertungsergebnis werden die erfaßten Vermittlungsdaten modifiziert oder unverändert über das Bussystem an den zumindest einen Zielausgang der Vermittlungseinheit vermittelt und dort in einen der jeweiligen seriell oder parallel vorliegenden Nutzinformation wieder hinzugefügten Paketkopf eingetragen - Anspruch 6. Durch diese vorteilhafte Ausgestaltung werden parallel zur Vermittlung der Nutzdaten die erfaßten Vermittlungsdaten durch einen in der Vermittlungseinheit ablaufenden Paketkopf-Bearbeitungsprozeß entsprechend dem Inhalt der Verbindungstabelle modifiziert,bzw. angepaßt und anschließend den entsprechenden, bereits an den Ziel-Ausgang der Vermittlungseinheit vermittelten Nutzdaten hinzugefügt, d.h. ein vollständiges Paket mit aktuellen Vermittlungsdaten gebildet. Die so gebildeten Datenströme werden beispielsweise über weitere Vermittlungseinheiten gemäß einer Paket-Vermittlungstechnik an das endgültige Ziel vermittelt.

Durch die Seriell/Parallel-Wandlung der Vermittlungsdaten und die anschließende parallele Vermittlung der Vermittlungsdaten an den zumindest einen betreffenden Ziel-Ausgang werden die vorteilhaften Übertragungseigenschaften, d.h. die hohen Daten-Übertragungsraten paralleler Bussysteme bei vergleichsweise niedrigen Taktraten genutzt. Bei der Vermittlung von ATM-Zellen - Anspruch 8 - über einen als Parallel-Bussystem mit einer Wortbreite von 32 Bit oder Vielfachen davon - Anspruch 11 - wird vorteilhaft aus den ATM-Zellköpfen bzw. aus den ATM-Zellkopf-Daten die 1 Byte umfassende Fehlerkorrektur-Information entfernt und die ATM-Zellkopf-Daten ausschließlich der 1 Byte umfassenden Fehlerkorrektur-Information über das Parallel-Bussystem modifiziert oder unverändert an den zumindest einen betreffenden Ausgang vermittelt und in einen ATM-Zellkopf eingetragen. Desweiteren wird am betreffenden Ausgang eine entsprechend angepaßte Fehlerkorrektur-Information in die ATM-Zellkopf-Daten bzw. in den ATM-Zellkopf eingefügt - Anspruch 12. Durch die Ausgestaltung des Bussystems als Parallel-Bussystem mit einer Wortbreite von beispielsweise 32 Bit werden die in einer ATM-Zelle angeordneten Nutzdaten mit einem Datenvolumen von 48 Byte besonders effektiv, d.h. unter Ausnutzung der gesamten Wortbreite des Parallel-Bussystems innerhalb von 12 Schreibzyklen vermittelt - 12 x 32 Bit = 48 Byte Nutzdaten. Durch die Entfernung der 1 Byte umfassenden Fehlerkorrektur-Information aus den 5 Byte umfassenden ATM-Zellkopf-Daten werden die ATM-Zellköpfe bzw. die ATM-Zellkopf-Daten an die 32 Bit-Struktur des Pärallel-Bussystems angepaßt - 4 x 8 Byte = 32 Bit. Durch diese vorteilhafte Ausgestaltung können die ATM-Zellkopf-Informationen jeweils als 32 Bit Datenwort innerhalb eines Schreibzyklusses über das Parallel-Bussystem an den zumindest einen entsprechenden Ausgang vermittelt werden.

Weitere vorteilhafte Ausgestaltungen des erfindungsgemäßen Verfahrens sowie eine Vermittlungseinheit zum Vermitteln von paketorientierten Datenströmen sind den weiteren Ansprüchen zu entnehmen.

Im folgenden wird das erfindungsgemäße Verfahren zur Vermittlung von paketorientierten Datenströmen in einer Vermittlungseinheit anhand zweier Blockschaltbilder näher erläutert. Dabei zeigen
- FIG 1: eine mehrere Ein- und Ausgänge aufweisende Vermittlungseinheit und
- FIG 2: eine zur Realisierung des erfindungsgemäßen Verfahrens entsprechend ausgestaltete und in der Vermittlungseinheit gemäß FIG 1 angeordnete Teilnehmeranschlußeinheit.

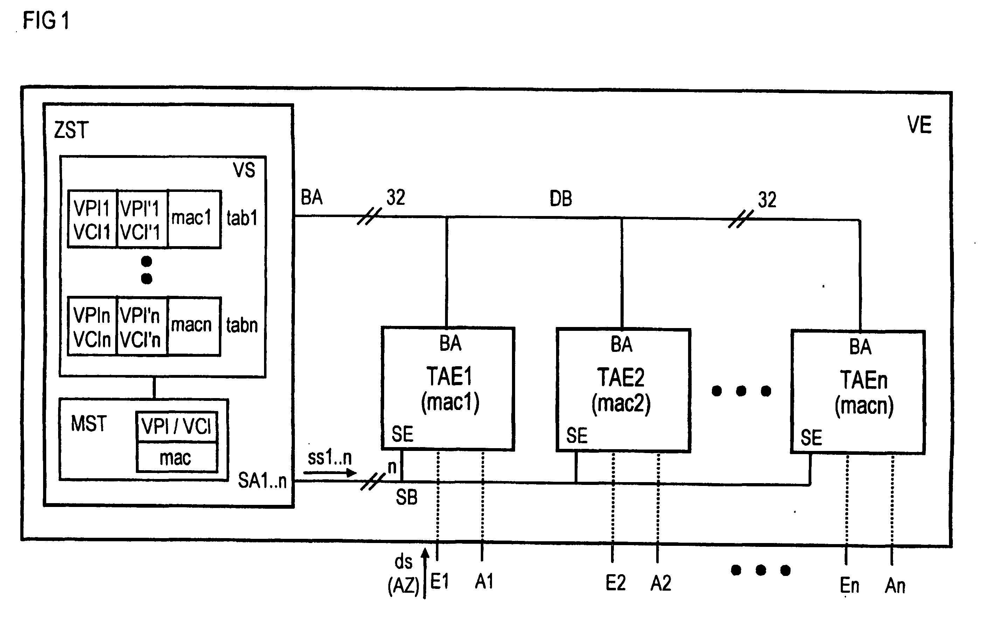

Fig 1 zeigt eine mehrere Ein- und Ausgänge E1...n, A1...n aufweisende Vermittlungseinheit VE, welche Bestandteil eines nach dem Asynchronen Transfer Modus - ATM - konzipierten Kommunikationsnetzes - nicht dargestellt - ist. In diesem Ausführungsbeispiel ist die Vermittlungseinheit VE im Endstellenbereich des ATM-Kommunikationsnetzes angeordnet, d.h. es werden insbesondere Multiplexer-Funktionen durch die Vermittlungseinheit VE bereitgestellt, mittels denen an einen Eingang E1...n der Vermittlungseinheit VE eintreffende Datenströme ds bzw. ATM-Zellen AZ auf die einzelnen jeweils mit einem Ein- und Ausgang E1...n, A1...n der Vermittlungseinheit VE verbundenen Teilnehmer - nicht dargestellt - verteilt werden. Die Vermittlungseinheit VE ist beispielsweise über den ersten Eingang E1 und einem Lichtwellenleiter - nicht dargestellt - an das ATM-Kommunikationsnetz angeschlossen. Über den Lichtwellenleiter werden ATM-Zellen AZ mit einer Übertragungsrate von 155 MBit/s an den ersten Eingang E1 übermittelt. Je ein Ein- und Ausgang E1...n, A1...n der Vermittlungseinheit VE ist jeweils mit einer in der Vermittlungseinheit VE angeordneten Teilnehmer-Anschlußeinheit TAE1...n verbunden, wobei die einzelnen Teilnehmer-Anschlußeinheiten TAE1...n identisch aufgebaut sind.

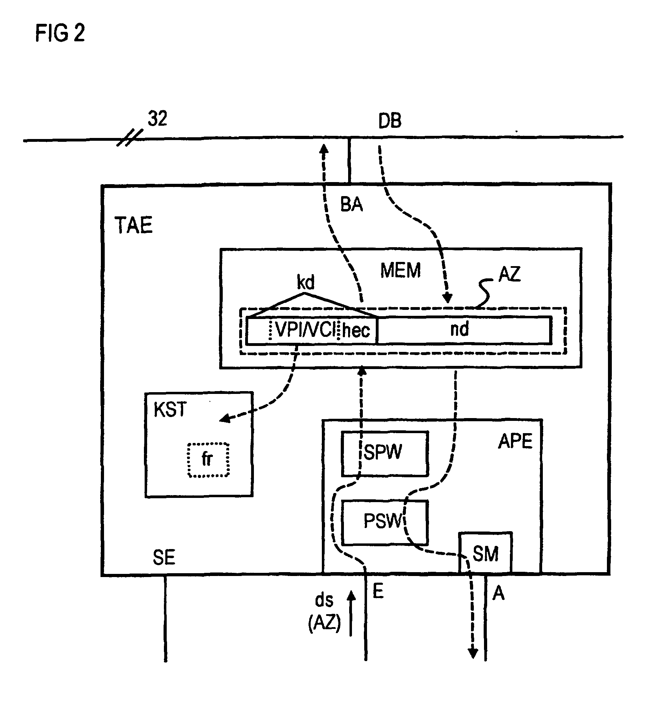

Der Aufbau einer Teilnehmer-Anschlußeinheit TAE1...n ist beispielhaft in FIG 2 dargestellt. Jede Teilnehmer-Anschlußeinheit TAE1...n weist eine Anpaßeinrichtung APE auf, an welche jeweils ein Ein- und Ausgang E1...n, A1...n der Vermittlungseinheit VE herangeführt ist. In der Anpaßeinrichtung APE ist eine Seriell/Parallel-Umwandlungseinrichtung SPW zur Seriell/Prarallel-Wandlung von am Eingang E eintreffenden Datenströmen ds bzw. ATM-Zellen AZ und eine Parallel/Seriell-Umwandlungseinrichtung PSW zur Parallel/Seriell-Wandlung von an den Ausgang A zu übermittelnden Datenströmen ds bzw. ATM-Zellen AZ angeordnet.
Des Weiteren sind in der Anpaßeinrichtung APE weitere Mittel SM zur Anpassung der an den Ausgang A der Vermittlungseinheit VE zu übermittelnden Daten bzw. Signale an die jeweils durch den entsprechenden Ausgang A repräsentierte Anschlußschnittstelle - nicht dargestellt - angeordnet. Jede Teilnehmeranschlußeinheit TAE1...n weist einen Zwischenspeicher MEM auf, in welchem am Eingang E eintreffende ATM-Zellen AZ - nach einer Seriell/Parallel-Wandlung durch die Seriell/Parallel-Umwandlungseinheit SPW - oder an den Ausgang A zur übermittelnde ATM-Zellen AZ zwischengespeichert werden.

In FIG 2 ist beispielsweise eine im Speicher MEM zwischengespeicherte ATM-Zelle AZ dargestellt. Jede ATM-Zelle AZ weist 48 Byte Nutzdaten nd und 5 Byte umfassende, im ATM-Zellkopf kd eingetragene ATM-Zellkopf-Daten auf. Die ATM-Zellkopf-Daten umfassen neben den Vermittlungs-Daten, d.h. neben den Werten der Virtuellen-Pfad-Identifizierung VPI und der Virtuellen-Kanal-Identifizierung VCI weitere Informationen beispielsweise über die Art der Nutzdaten nd - auch als Payload-Type bezeichnet, nicht dargestellt -, Informationen über die Zellen-Priorität - auch als Cell Loss Priority beizeichnet, nicht dargestellt - sowie zusätzlich ein Byte Fehlerkorrektur-Informationen hec zur Fehlererkennung und Fehlerkorrektur der ATM-Zellkopf-Daten auf. Des Weiteren ist in jeder Teilnehmeranschlußeinheit TAE1...n eine Kopffeld-Bearbeitungseinheit KST zur Erfassung - durch einen strichlierten Pfeil angedeutet - der jeweils im Zwischenspeicher MEM zwischengespeicherten ATM-Zellköpfe kd bzw. der ATM-Zellkopf-Daten einschließlich der Vermittlungs-Daten VPI, VCI sowie zur Erfassung der im Speicher MEM zwischengespeicherten Nutzdaten nd angeordnet. In der Kopffeld-Bearbeitungseinheit KST ist eine Fehlerbehandlungs-Routine fr - durch punktiertes Rechteck dargestellt - zur Auswertung der in den ATM-Zellkopf-Daten eingetragenen Fehler-Korrektur-Informationen hec realisiert. Jede Teilnehmer-Anschlußeinheit TAE1...n ist über einen Anschluß BA an ein, ein Parallel-Bussystem realisierendes Bussystem DB mit einer Wortbreite von 32 Bit angeschlossen. Die in einer Teilnehmeranschlußeinheit TAE1...n angeordnete Seriell/Parallel-Umwandlungseinheit SPW und die Parallel/Seriell-Umwandlungseinheit PSW sowie der Zwischenspeicher MEM sind an die Wortbreite von 32 Bit des Bussystems DB angepaßt.

Das Bussystem DB ist über einen weiteren Anschluß BA mit einer in der Vermittlungseinheit VE angeordneten und den Zugriff der einzelnen Teilnehmeranschlußeinheiten TAE1...n auf das Bussystem DB steuernden Steuereinrichtung ZST - vgl. FIG 1 - verbunden. Die Steuereinrichtung ZST weist Konvertierungsmittel MST - insbesondere Programme - zur Umwandlung bzw. Konvertierung von in den ATM-Zellköpfen kd bzw. in den ATM-Zellkopf-Daten enthaltenen VPI-, VCI-Werte in jeweils eine, eine Teilnehmeranschlußeinheit TAE1...n repräsentierende Hardwareadresse mac auf. Die Konvertierung erfolgt mit Hilfe von Tabelleneinträgen tab1...n, welche in einem in der Steuereinrichtung ZST angeordneten und den Konvertierungs-Mitteln MST zugeordneten Speicher VS gespeichert sind. In jedem Tabelleneintrag tab1...n sind den Vermittlungsdaten VPI1...n, VCI1...n, d.h. den VPI- und VCI-Werten die entsprechende Hardwareadresse mac1...n der Teilnehmer-Anschlußeinheit TAE1...n zugeordnet. Des Weiteren weist jeder Tabelleneintrag TAE1...n optional weitere Vermittlungsdaten VPI'1...n, VCI'1...n auf, durch welche ggf. die aktuellen Vermittlungsdaten VPI1...n, VCI1...n mit Hilfe weiterer in der Steuereinrichtung ZST angeordneter Mittel ersetzt werden. Diese Mittel können beispielsweise auch durch die Konvertierungsmittel MST realisiert sein.

Die Steuereinheit ZST - vgl. FIG 1 - ist jeweils über einen Steuerausgang SA1...n und einer Steuerleitung SL1...n mit einem Steueranschluß SE einer Teilnehmer-Anschlußeinheit TAE1...n verbunden. Durch jeweils über die Steuerleitungen SL1...n an die Teilnehmer-Anschlußeinheiten TAE1...n übermittelte Steuersignale ss1...n wird der Zugriff der Teilnehmer-Anschlußeinheiten TAE1...n auf den Datenbus DB gesteuert, d.h. eine oder mehrere Teilnehmer-Anschlußeinheiten TAE1...n aktiviert oder deaktiviert, wobei jeweils nur einer Teilnehmer-Anschlußeinheit TAE1...n bzw. der Steuereinheit ZST der Zugriff auf das Bussystem DB erteilt wird.

Im Folgenden wird beispielhaft die erfindungsgemäße Vermittlung der am ersten Eingang E1 der Vermittlungseinheit VE eintreffenden ATM-Zellen AZ an einen oder mehrere, durch die im ATM-Zellkopf kd enthaltenen Vermittlungsdaten VCI, VPI identifizierten Ausgänge A2...n der Vermittlungseinheit VE näher erläutert:

Eine am ersten Eingang E1 der Vermittlungseinheit VE eintreffende ATM-Zelle AZ wird durch die in der Anpaßeinrichtung APE der ersten Teilnehmer-Anschlußeinheit TAE1 angeordnete Seriell/Parallel-Umwandlungseinheit SPW seriell/parallel-gewandelt und im Speicher MEM zwischengespeichert, wobei die im ATM-Zellkopf kd enthaltenen ATM-Zellkopf-Daten VPI, VCI, hec sowie die in der ATM-Zelle AZ angeordneten Nutzdaten nd durch die Kopffeld-Bearbeitungseinheit KST erfaßt werden. Mittels der im ATM-Zellkopf kd enthaltenen, 1 Byte umfassenden Fehlerkorrektur-Informationen hec werden die ATM-Zellkopf-Daten durch die Fehlerbehandlungs-Routine fr auf Fehler untersucht. Bei Erkennen eines Fehlers in den ATM-Zellkopf-Daten werden diese - falls möglich - mittels der Fehlerkorrektur-Informationen hec durch die Fehlerbehandlungs-Routine fr korrigiert oder - bei unmöglicher Fehlerkorrektur - die im Speicher MEM zwischengespeicherte ATM-Zelle AZ verworfen. Die Nutzdaten nd von ATM-Zellen AZ, bei denen kein Fehler in den ATM-Zellkopf-Daten festgestellt wurde oder von ATM-Zellen AZ, bei denen ein Fehler in den ATM-Zellkopf-Daten erkannt und korrigiert wurde, werden anschließend durch die Seriell/Parallel-Umwandlungseinheit SPW an das Format des Bussystems DB, d.h. an die Wortbreite von 32 Bit angepaßt. In diesem Ausführungsbeispiel werden die 48 Byte Datenumfang umfassenden Nutzdaten nd in 12 Datenworte mit einer Wortbreite von jeweils 32 Bit umgewandelt. Gleichzeitig wird durch die in der Kopffeld-Bearbeitungseinheit KST angeordnete Fehlerbehandlungs-Routine fr die 1 Byte umfassende Fehlerkorrektur-Information hec aus den ATM-Zellkopf-Daten entfernt und anschließend die um 1 Byte auf 4 Byte Datenumfang reduzierten ATM-Zellkopf-Daten durch die Seriell/Parallel-Umwandlungseinheit SPW in ein an das Format des Bussystems DB angepaßtes Datenwort mit einer Wortbreite von 32 Bit umgewandelt, welches anschließend innerhalb eines Bus-Schreibzyklusses über das Bussystem DB an den Anschluß BA der Steuereinheit ZST übermittelt wird.

Durch die in der Steuereinheit ZST angeordneten Konvertierungsmittel MST werden die in den übermittelten ATM-Zellkopf-Daten enthaltenen Vermittlungsdaten, d.h. die VPI-, VCI-Werte mit den in den Tabelleneinträgen tab1...n gespeicherten Vermittlungsdaten VPI1...n, VCI1...n verglichen und bei Übereinstimmung die jeweiligen in den Zellkopf-Daten enthaltenen VPI-und VCI-Werte in die entsprechende, gespeicherte Hardwareadresse mac1...n der einen Ziel-Ausgang A1...n realisierenden Teilnehmer-Anschlußeinheit TAE1...n umgewandelt. Bei der Vermittlung von Multicast-Nachrichten an mehrere mit der Vermittlungseinheit VE verbundene Teilnehmer sind einer Kombination von VPI-, VCI-Werten mehrere Hardwareadressen mac1...n von Teilnehmer-Anschlußeinheiten TAE1...n zugeordnet und in den Tabelleneinträgen tab1...n entsprechend gespeichert. Durch die zumindest eine gebildete Hardwareadresse mac1...n ist diejenige Teilnehmer-Anschlußeinheit TAE1...n identifiziert, an welche die im Zwischenspeicher MEM der ersten Teilnehmer-Anschlußeinheit TAE1 zwischengespeicherten Nutzdaten nd zu vermitteln sind. In Abhängigkeit von der zumindest einen gebildeten Hardwareadresse mac1...n werden entsprechende Steuersignale ss1...n gebildet und und über die Steuerausgänge SA1...n der Steuereinheit ZST und über die Steuerleitungen SL1...n an die jeweiligen Steuereingänge SE der Teilnehmer-Anschlußeinheiten TAE2...n übermittelt, wobei die Zwischenspeicher MEM der durch die Steuersingnale ss1...n identifizierten bzw. adressierten Teilnehmer-Anschlußeinheiten TAE2...n aktiviert werden. Anschließend werden vom Zwischenspeicher MEM der ersten Teilnehmer-Anschlußeinheit TAE1 die Nutzdaten nd über den Datenbus DB innerhalb von 12 Bus-Schreibzyklen in den oder in die aktivierten Zwischenspeicher MEM der entsprechenden Teilnehmer-Anschlußeinheiten TAE2...n übertragen und in diesen gespeichert.

Gemäß einem ersten Ausgestaltungsbeispiel sind an die Ausgänge A1...n der Vermittlungseinheit VE jeweils ein Kommunikationsendgerät, beispielsweise ein Multimedia-Kommunikationsendgerät - nicht dargestellt - angeschlossen, wobei für die Vermittlung der an einen Ausgang A2...n übermittelten Nutzdaten nd keine weiteren vermittlungs- bzw. verbindungs-spezifischen Daten, d.h. ATM-Zellkopf-Daten erforderlich sind. Bei dieser Ausgestaltungsbeispiel werden die im Zwischenspeicher MEM einer ein Ziel repräsentierenden Teilnehmer-Anschlußeinheit TAE2...n gespeicherten Nutzdaten nd durch die in der Anpaßeinrichtung APE der Ziel-Teilnehmer-Anschlußeinheit TAE2...n angeordnete Parallel/Seriell-Umwandlungseinheit PSW parallel/seriell-gewandelt und der gebildete serielle Nutzdatenstrom durch die Schnittstellen-Einheit SM an die durch den entsprechenden Ausgang A2...n repräsentierte Anschlußschnittstelle angepaßt. Anschließend werden die Nutzdaten nd an das entsprechende Multimedia-Kommunikationsendgerät übermittelt.

Gemäß einem zweiten Ausgestaltungsbeispiel sind an die Ausgänge A1...n der Vermittlungseinheit VE weitere ATM-Vermittlungseinheiten - nicht dargestellt - oder weitere nach dem Asynchronen Transfer Modus - ATM - konzipierte ATM-Kommunikationsendgeräte angeschlossen, d.h. für die weitere Vermittlung der an einen Ausgang A1...n übermittelten Nutzdaten nd sind ATM-konforme, vermittlungs- bzw. verbindungs-spezifischen Daten d.h. ATM-Zellkopf-Daten erforderlich. Dazu werden parallel zur Übermittlung der Nutzdaten nd an die zumindest eine Ziel-Teilnehmer-Anschlußeinheit TAE2...n die Vermittlungsdaten VPI, VCI der an die Steuereinheit ZST übermittelten und auf 4 Byte Datenumfang reduzierten ATM-Zellkopf-Daten mittels der Konvertierungsmittel MST durch die entsprechenden, in den jeweiligen Tabelleneinträgen tab1...n gespeicherten und zugeordneten neuen Vermittlungsdaten VPI'1...n, VCI'1...n ersetzt. Die neu gebildeten ATM-Zellkopf-Daten werden innerhalb eines Bus-Schreibzyklusses über das Bussystem DB an die zumindest eine, durch die Steuersignale ss1...n identifizierte bzw. adressierte Teilnehmer-Anschlußeinheit TAE2...n übermittelt. Durch die jeweils in einer Teilnehmer-Anschlußeinheite TAE1...n angeordnete Zellkopf-Bearbeitungseinheit KST werden den übermittelten und im Zwischenspeicher MEM gespeicherten Nutzdaten nd ein formatgerechter ATM-Zellkopf kd, d.h. 5 Byte Datenumfang umfassende ATM-Zellkopf-Daten hinzugefügt, bzw. im Zwischenspeicher MEM gespeichert wobei die neu gebildeten und über das Bussystem an die Teilnehmer-Anschlußeinheit TAE1...n übermittelten, 4 Byte Datenumfang aufweisenden ATM-Zellkopf-Daten in den hinzugefügten ATM-Zellkopf kd eingetragen werden. Desweiteren werden die im neu hinzugefügten ATM-Zellkopf kd enthaltenen Fehlerkorrektur-Informationen hec durch die Zellkopf-Bearbeitungseinheit KST neu berechnet und entsprechend in die ATM-Zellkopf-Daten eingetragen. Vorteilhaft erfolgt die Berechnung der neuen Fehlerkorrektur-Informationen hec parallel zur Übermittlung der Nutzdaten nd. Die jeweils im Zwischenspeicher MEM der einzelnen ein Ziel repräsentierenden Teilnehmer-Anschlußeinheiten TAE2...n formatgerecht abgespeicherten ATM-Zellen - d.h. die Nutzdaten nd und die hinzugefügten, aktualisierten ATM-Zellkopf-Daten werden anschließend durch die in der Anpaßeinrichtung APE der Ziel-Teilnehmer-Anschlußeinheit TAE2...n angeordnete Parallel/Seriell-Umwandlungseinheit PSW parallel/seriell-gewandelt und der gebildete serielle ATM-Datenstrom durch die Schnittstelleneinheit SM an die durch den entsprechenden Ausgang A1...n repräsentierte Anschlußschnittstelle angepaßt. Über die entsprechenden Ausgänge A1...n der Vermittlungseinheit VE werden die ATM-Zellen AZ bzw. die seriellen ATM-Datenströme an die daran angeschlossenen ATM-Vermittlungseinheiten oder ATM-Kommunikationsendgeräte übermittelt.

Das erfindungsgemäße Verfahren ermöglicht durch den Einsatz eines parallelen Bussystems DB die Parallelisierung der an einen Eingang E1...n der Vermittlungseinheit VE eintreffenden, seriellen Datenströme ds bzw. ATM-Zellen AZ. Da Bussysteme DB, insbesondere parallele Bussysteme mit deutlich geringeren Taktraten als aktuell eingesetzte Koppelfelder bei Realisierung der gleichen Daten-Übertragungsrate getaktet werden, wird der wirtschaftliche Aufwand zur Realisierung von wenige Ein- und Ausgänge E1...n, A1...n aufweisenden Vermittlungseinheiten VE, insbesondere von im Endstellenbereich eingesetzten Vermittlungseinheiten VE deutlich verringert. Ein seriell ausgestaltetes 8x8 Koppelfeld, bei dem jeder Anschluß Daten mit einer Daten-Übertragungsrate von 155 MBit/s überträgt, muß beispielsweise mit einer Taktrate von 1,25 GBit/s getaktet werden. Dagegen wird das im Ausführungsbeispiel beschriebene, parallele Bussystem DB zur Vermittlung von Datenströmen ds in einer Vermittlungseinheit VE bei Bereitstellung der gleichen Daten-Übertragungsrate von 155 MBit/s pro Teilnehmer-Anschlußeinheit TAE1...n lediglich mit einer technisch und wirtschaftlich einfacher zu realisierenden Taktrate von 40 MBit/s getaktet. Neben der Kostenreduktion bietet der Einsatz eines parallelen Bussystems DB als Koppelfeld den zusätzlichen Vorteil, daß Bussysteme auf einer weit verbreiteten und ausgereiften Technologie basieren. Desweiteren wird durch den Einsatz eines parallelen Bussystems DB die Verbreitung von Multicast-Nachrichten, d.h. die Vermittlung von ATM-Zellen AZ bzw. von darin angeordneten Nutzdaten nd an mehrere Ausgänge A1...n der Vermittlungseinheit VE unterstützt.

## Patentansprüche

1. Verfahren zur Vermittlung von paketorientierten, Nutzdaten (nd) und im Paketkopf (kd) eingefügte Vermittlungsdaten (VPI, VCI) aufweisenden Datenströmen (ds) über ein Bussystem (DB) in einer zumindest einen Ein- und Ausgang (E1...n, A1...n) aufweisenden Vermittlungseinheit (VE),
bei dem bei an einem Eingang (E1...n) eintreffenden paketorientierten Datenstrom (ds) die im Paketkopf (kd) der Pakete (AZ) enthaltenen Vermittlungsdaten (VPI, VCI) erfasst und bewertet werden,
**dadurch gekennzeichnet,**
**dass** in Abhängigkeit vom Bewertungsergebnis nur die betreffenden Nutzdaten (nd) über das Bussystem (DB)an einen Ziel-Ausgang (A1...n) der Vermittlungseinheit (VE) vermittelt werden.

2. Verfahren nach Anspruch 1,
**dadurch gekennzeichnet, dass** in Abhängigkeit vom Bewertungsergebnis die betreffenden Nutzdaten (nd) an mehrere Ziel-Ausgänge (A1...n) der Vermittlungseinheit (VE) vermittelt werden.

3. Verfahren nach Anspruch 1 oder 2,
**dadurch gekennzeichnet, dass** der zumindest eine Ziel-Ausgang (A1...n) der Vermittlungseinheit (VE) durch eine in dieser Vermittlungseinheit (VE) gespeicherten Zuordnung (tab1...n) von Vermittlungsdaten (VPI1...n, VCI1...n) zu zumindest einem Ausgang (A1...n) ermittelt wird.

4. Verfahren nach Anspruch 1,2 oder 3,
**dadurch gekennzeichnet, dass** bei einem an einem Eingang (E1...n) der Vermittlungseinheit (VE) eintreffenden, seriellen, paketorientierten Datenstrom (ds) die Nutzdaten (nd) seriell/parallel umgewandelt und parallel an den betroffenen Ausgang (A1...n) vermittelt werden.

5. Verfahren nach Anspruch 4,
**dadurch gekennzeichnet, dass** die an einen Ausgang (A1...n) der Vermittlungseinheit (VE) parallel vermittelten Nutzdaten (nd) parallel/seriell gewandelt werden.

6. Verfahren nach einen der Ansprüche 1 bis 5,
**dadurch gekennzeichnet, dass** in Abhängigkeit vom Auswertungsergebnis die erfassten Vermittlungsdaten (VPI, VCI) modifiziert oder unverändert, unabhängig von den jeweiligen Nutzdaten (nd) über das Bussystem (DB) an den zumindest einen Ziel-Ausgang (A1...n) der Vermittlungseinheit (VE) vermittelt und dort in einen der jeweiligen seriell oder parallel vorliegenden Nutzinformation (nd) wieder hinzugefügten Paketkopf (kd) eingetragen werden.

7. Verfahren nach Anspruch 6,
**dadurch gekennzeichnet, dass** die Vermittlungsdaten (VPI, VCI) seriell/parallel umgewandelt und parallel an den zumindest einen betreffenden Ziel-Ausgang (A1...n) vermittelt werden.

8. Verfahren nach einem der vorherigen Ansprüche,
**dadurch gekennzeichnet, dass** die an einem Eingang (E) der Vermittlungseinheit (VE) eintreffenden paketorientierten Datenströme (ds) nach dem Asynchronen-Transfer-Modus - ATM - gebildet und in den Zellköpfen (kd) der ATM-Zellen (AZ) die ATM-Vermittlungsdaten (VPI, VCI) eingefügt sind, wobei die ATM-Vermittlungsdaten (VPI, VCI) jeweils aus einer Virtuellen-Pfad-Identifizierung (VPI) und einer Virtuellen-Kanal-Identifizierung (VCI) bestehen.

9. Verfahren nach Anspruch 8,
**dadurch gekennzeichnet, dass** eine ATM-Zelle (AZ) 48 Byte Nutzdaten (nd) und einen 5 Byte ATM-Zellkopf-Daten umfassenden ATM-Zellkopf (kd) aufweist, wobei ein Byte der ATM-Zellkopf-Daten als Fehlerkorrektur-Information (hec) zur Fehler-Erkennung und -Korrektur des ATM-Zellkopfes (kd) bzw. der ATM-Zellkopf-Daten vorgesehen ist.

10. Verfahren nach Anspruch 9,
**dadurch gekennzeichnet, dass** die ATM-Zellköpfe (kd) der am Eingang (E1...n) der Vermittlungseinheit (VE) eintreffenden ATM-Zellen (AZ) hinsichtlich der in den ATM-Zell-Kopf-Daten enthaltenen Fehlerkorrektur-Informationen (hec) bewertet und abhängig vom Bewertungsergebnis
- die in den ATM-Zellköpfen (kd) enthaltene ATM-Vermittlungs-Daten (VPI, VCI) ausgewertet, oder
- die in den ATM-Zellköpfen (kd) enthaltenen ATM-Zellkopf-Daten mittels der Fehlerkorrektur-Informationen (hec) korrigiert werden, oder
- die ATM-Zellen (AZ) verworfen werden.

11. Verfahren nach einem der vorherigen Ansprüche,
**dadurch gekennzeichnet, dass** das Bussystem (DB) durch ein Parallel-Bussystem mit einer Wortbreite von 32 Bit oder Vielfachen davon realisiert ist.

12. Verfahren nach einem der Ansprüche 9 bis 11,
**dadurch gekennzeichnet,**
- **dass** aus den ATM-Zellköpfen (kd) bzw. aus den ATM-Zellkopf-Daten die 1 Byte umfassende Fehlerkorrektur-Information (hec) entfernt wird und
- **dass** die ATM-Zellkopf-Daten ausschließlich der 1 Byte umfassende Fehlerkorrektur-Information (hec) über das Parallel-Bussystem (DB) modifiziert oder unverändert an den zumindest einen betreffenden Ausgang (A1...n) vermittelt und in einen ATM-Zellkopf (kd) eingetragen werden, und
- **dass** eine entsprechend angepaßte Fehlerkorrektur-Information (hec) in die ATM-Zellkopf-Daten bzw. in den ATM-Zellkopf (kd) eingefügt wird.

13. Vermittlungseinheit (VE) zum Vermitteln von an zumindest einen Eingang (E1...n) eintreffenden und in paketorientierten Datenströmen (ds) enthaltenen Nutzdaten (nd) an zumindest einen Ziel-Ausgang (A1...n) gemäß in Paketköpfen (kd) der Datenströme (ds) enthaltenen Vermittlungsdaten (VPI, VCI),
- mit jeweils einen Ein- und Ausgang (E1...n, A1...n) realisierenden Teilnehmer-Anschlusseinheiten (TAE1...n)
- mit einem mit den Teilnehmer-Anschlusseinheiten (TAE1...n) verbundenen Bussystem (DB), und
- dass in den Teilnehmer-Anschlusseinheiten (TAE1...n)
-- jeweils eine Kopffeld-Bearbeitungseinheit (KST) zum Erfassen von Paketen (AZ) einschließlich der Vermittlungs-Daten (VPI, VCI) aus dem am zumindest einen Eingang (E1...n) eintreffenden, paketorientierten Datenstrom (ds), und
-- jeweils zumindest ein dem Eingang (E1...n) und Ausgang (A1...n) zugeordneter Zwischenspeicher (MEM) zum separaten Zwischenspeichern der eintreffenden und vermittelten Nutzdaten (nd) und des Paketkopfes (kd) angeordnet ist,
- dass in der Vermittlungseinheit (VE) eine mit den Teilnehmer-Anschlusseinheiten (TAE1...n) verbundene Steuereinrichtung (ZST) zum Bewerten der zwischengespeicherten Vermittlungs-Daten (VPI, VCI) und zur Aktivierung eines durch das Bewertungsergebnis bestimmten Zwischenspeichers (MEM) zumindest eines Ziel-Ausgangs (A1...n) vorgesehen ist,
- **dadurch gekennzeichnet, dass** die Steuereinrichtung derart ausgestaltet ist, daß in Abhängigkeit vom Bewertungsergebnis nur die zwischengespeicherten Nutzdaten (nd) über das Bussystem (DB) an den zumindest einen Ziel-Ausgang (A1...n) vermittelt werden.

14. Vermittlungseinheit nach Anspruch 13,
**dadurch gekennzeichnet, dass** die Steuereinrichtung (ZST) jeweils über eine separate Verbindungsleitung oder über das Bussystem (DB) mit den Teilnehmer-Anschlusseinheiten (TAE1...n) verbunden ist.

15. Vermittlungseinheit nach Anspruch 13 oder 14,
**dadurch gekennzeichnet, dass** der Steuereinrichtung (ZST) weitere Speichermittel (VS) zur Speicherung der Zuordnung von Vermittlungs-Daten (VPI, VCI) zu zumindest einem Ausgang (A1...n) zugeordnet sind, wobei der zumindest eine Ziel-Ausgang (A1...n) mit Hilfe der weiteren Speichermittel (VS) ermittelt wird.

16. Vermittlungseinheit nach einem der Ansprüche 13 bis 15,
**dadurch gekennzeichnet, dass** in der Teilnehmer-Anschlusseinheit (TAE1...n) Umwandlungsmittel (SPW) zur Seriell/Parallel-Wandlung zumindest des eintreffenden seriellen, paketorientierten Datenstromes (ds) angeordnet sind, wobei die gewandelten Nutzdaten (nd) parallel im Zwischenspeicher (MEM) der Teilnehmer-Anschlusseinheit (TAE1...n) gespeichert werden.

17. Vermittlungseinheit nach Anspruch 16,
**dadurch gekennzeichnet, dass** die Wortbreite des Umwandlungsmittels (SPW) sowie die Wortbreite der Zwischenspeicher (MEM) an die Wortbreite des als Parallel-Bussystem realisierten Bussystems (DB) angepasst ist, wobei die Wortbreite 32 Bit oder Vielfachen davon beträgt.

18. Vermittlungseinheit nach Anspruch 16 oder 17,
**dadurch gekennzeichnet, dass** in der Vermittlungseinheit (VE) jedem Ausgang (A1...n) Umwandlungsmittel (PSW) zur Parallel/Seriell-Wandlung der parallel vermittelten Nutzdaten (nd) zugeordnet sind.

19. Vermittlungseinheit nach einem der Ansprüche 13 bis 18,
**dadurch gekennzeichnet,**
- **dass** der Steuereinheit (ZST) Mittel (MST) zur Modifizierung der erfassten Vermittlungsdaten (VPI, VCI) in Abhängigkeit vom Auswertungsergebnis und weitere Mittel zur Vermittlung der modifizierten oder unveränderten Vermittlungsdaten (VPI', VCI') unabhängig von den jeweiligen Nutzdaten (nd) über das Bussystem (DB) an den zumindest einen Ziel-Ausgang (A1...n) der Vermittlungseinheit (VE) zugeordnet sind, und
- **dass** jedem Ausgang (A1...n) weitere Mittel (KST) zum Hinzufügen eines Paketkopfes (kd') an die jeweiligen seriell oder parallel vorliegenden Nutzdaten (nd) und zum Eintragen der vermittelten Vermittlungsdaten (VPI', VCI') in den hinzugefügten Paketkopf (kd') zugeordnet sind.

## Claims

1. Method for switching packet-oriented data streams (ds) having useful data (nd) and switching data (VPI, VCI) inserted in the packet header (kd) via a bus system (DB) in a switching unit (VE) having at least one input and output (E1 ... n, A1 ... n),
in which when a packet-oriented data stream (ds) arrives at an input (E1 ... n) the switching data (VPI, VCI) contained in the packet header (kd) of the packets (AZ) is acquired and evaluated,
**characterised in that**
only the relevant useful data (nd) is switched via the bus system (DB) to a destination output (A1 ... n) of the switching unit (VE) on the basis of the evaluation result.

2. Method according to Claim 1,
**characterised in that** the relevant useful data (nd) is switched to a plurality of destination outputs (A1 ... n) of the switching unit (VE) on the basis of the evaluation result.

3. Method according to Claim 1 or 2,
**characterised in that** the at least one destination output (A1 ... n) of the switching unit (VE) is determined by an assignment (tab1 ... n) stored in said switching unit (VE) of switching data (VPI1 ... n, VCI1 ... n) to at least one output (A1 ... n).

4. Method according to Claim 1, 2 or 3,
**characterised in that** when a serial, packet-oriented data stream (ds) arrives at an input (E1 ... n) of the switching unit (VE), the useful data (nd) is converted from serial to parallel and switched in a parallel fashion to the relevant output (A1 ... n).

5. Method according to Claim 4,
**characterised in that** the useful data (nd) switched in a parallel fashion to an output (A1 ... n) of the switching unit (VE) is converted from parallel to serial.

6. Method according to one of Claims 1 to 5,
**characterised in that** the acquired switching data (VPI, VCI) is switched modified or unchanged on the basis of the evaluation result, irrespective of the respective useful data (nd) via the bus system (DB) to the at least one destination output (A1 ... n) of the switching unit (VE) and input there into a packet header (kd) added in turn to the respective serial or parallel useful information (nd).

7. Method according to Claim 6,
**characterised in that** the switching data (VPI, VCI) is converted from serial to parallel and switched in a parallel fashion to the at least one relevant destination output (A1 ... n).

8. Method according to one of the preceding Claims,
**characterised in that** the packet-oriented data streams (ds) arriving at an input (E) of the switching unit (VE) are formed according to the Asynchronous Transfer Mode - ATM - and the ATM switching data (VPI, VCI) is inserted into the cell headers (kd) of the ATM cells (AZ), the ATM switching data (VPI, VCI) comprising a virtual path identifier (VPI) and a virtual channel identifier (VCI) respectively.

9. Method according to Claim 8,
**characterised in that** an ATM cell (AZ) has 48 bytes of useful data (nd) and an ATM cell header (kd) comprising 5 bytes of ATM cell header data, a one byte of the ATM cell header data being provided as error correction information (hec) for error identification and correction of the ATM cell header (kd) or the ATM cell header data.

10. Method according to Claim 9,
**characterised in that** the ATM cell headers (kd) of the ATM cells (AZ) arriving at the input (E1 ... n) of the switching unit (VE) are evaluated in respect of the error correction information (hec) contained in the ATM cell header data and on the basis of the evaluation result
- the ATM switching data (VPI, VCI) contained in the ATM cell headers (kd) is evaluated, or
- the ATM cell header data contained in the ATM cell headers (kd) is corrected using the error correction information (hec), or
- the ATM cells (AZ) are rejected.

11. Method according to one of the preceding Claims,
**characterised in that** the bus system (DB) is provided by a parallel bus system with a word width of 32 bits or multiples thereof.

12. Method according to one of Claims 9 to 11,
**characterised in that**
- the error correction information (hec) comprising 1 byte is removed from the ATM cell headers (kd) or from the ATM cell header data and
- the ATM cell header data excluding the error correction information (hec) comprising 1 byte is switched modified or unchanged via the parallel bus system (DB) to the at least one relevant output (A1 ... n) and input in an ATM cell header (kd), and
- correspondingly tailored error correction information (hec) is inserted into the ATM cell header data or into the ATM cell header (kd).

13. Switching unit (VE) for switching useful data (nd) arriving at at least one input (E1 ... n) and contained in packet-oriented data streams (ds) to at least one destination output (A1 ... n) according to switching data (VPI, VCI) contained in packet headers (kd) of the data streams (ds),
- with user terminal units (TAE1 ... n) providing one input and one output (E1 ... n), A1 ... n) respectively,
- with a bus system (DB) connected to the user terminal units (TAE1 ... n), and
- that in the user terminal units (TAE1 ... n)
-- a header field processing unit (KST) is provided respectively for acquiring packets (AZ) including the switching data (VPI, VCI) from the packet-oriented data stream (ds) arriving at the at least one input (E1 ... n), and
-- at least one buffer (MEM) assigned to the input (E1 ... n) and output (A1 ... n) is provided respectively for the separate buffering of the incoming and switched useful data (nd) and the packet header (kd)
- that in the switching unit (VE) a control device (ZST) connected to the user terminal unit (TAE1 ... n) is provided for evaluating the buffered switching data (VPI, VCI) and for activating a buffer (MEM) of at least one destination output (A1 ... n) defined by the evaluation result,
**characterised in that**
- the control unit is configured such that only the buffered useful data (nd) is switched via the bus system (DB) to the at least one destination output (A1 ... n) on the basis of the evaluation result.

14. Switching unit according to Claim 13,
**characterised in that** the control device (ZST) is connected respectively via a separate connecting line or via the bus system (DB) to the user terminal units (TAE1 ... n).

15. Switching unit according to Claim 13 or 14, **characterised in that** the control device (ZST) is assigned further storage means (VS) for storing the assignment of switching data (VPI, VCI) to at least one output A1 ... n), the at least one destination output (A1 ... n) being determined by means of the further storage means (VS).

16. Switching unit according to one of Claims 13 to 15,
**characterised in that** conversion means (SPW) are arranged in the user terminal unit (TAE1 ... n) for the serial/parallel conversion of at least the incoming serial, packet-oriented data stream (ds), the converted useful data (nd) being stored in a parallel fashion in the buffer (MEM) of the user terminal unit (TAE1 ... n).

17. Switching unit according to Claim 16,
**characterised in that** the word width of the conversion means (SPW) and the word width of the buffer (MEM) are tailored to the word width of the bus system (DB) provided as a parallel bus system, the word width being 32 bits or multiples thereof.

18. Switching unit according to Claim 16 or 17,
**characterised in that** conversion means (PSW) for parallel/serial conversion of the useful data (nd) switched in a parallel fashion are assigned to each output (A1 ... n) in the switching unit (VE).

19. Switching unit according to one of Claims 13 to 18,
**characterised in that**
- the control unit (ZST) is assigned means (MST) for modifying the acquired switching data (VPI, VCI) on the basis of the evaluation result and further means for switching the modified or unchanged switching data (VPI', VCI') irrespective of the respective useful data (nd) via the bus system (DB) to the at least one destination output (A1 ... n) of the switching unit (VE) and that
- each output (A1 ... n) is assigned further means (KST) for adding a packet header (kd') to the respective serial or parallel useful data (nd) and for inputting switched switching data (VPI', VCI') into the added packet header (kd').

## Revendications

1. Procédé pour commuter des flux de données (ds) orientés paquets, comportant des données utiles (nd) et des données de commutation (VPI, VCI) insérées dans l'en-tête de paquet (kd), par l'intermédiaire d'un système de bus (DB) dans une unité de commutation (VE) comportant au moins une entrée et une sortie (E1 ... n, A1 ... n),
dans lequel, étant donné un flux de données (ds) orienté paquets arrivant à une entrée (E1 ... n), les données de commutation (VPI, VCI) contenues dans l'en-tête de paquet (kd) des paquets (AZ) sont saisies et évaluées,
**caractérisé en ce que**
sont seules commutées, en fonction du résultat de l'évaluation, les données utiles (nd) concernées par l'intermédiaire du système de bus (DB) vers une sortie de destination (A1 ... n) de l'unité de commutation (VE).

2. Procédé selon la revendication 1,
**caractérisé en ce que** les données utiles (nd) concernées sont commutées vers plusieurs sorties de destination (A1 ... n) de l'unité de commutation (VE) en fonction du résultat de l'évaluation.

3. Procédé selon la revendication 1 ou 2,
**caractérisé en ce que** l'au moins une sortie de destination (A1 ... n) de l'unité de commutation (VE) est déterminée par une affectation (tab1 ... n), mise en mémoire dans cette unité de commutation (VE), de données de commutation (VPI1 ... n, VCI1 ... n) à au moins une sortie (A1 ... n).

4. Procédé selon la revendication 1, 2 ou 3,
**caractérisé en ce que**, étant donné un flux de données (ds) série orienté paquets, arrivant à une entrée (E1 ... n) de l'unité de commutation (VE), les données utiles (nd) font l'objet d'une conversion série / parallèle et sont commutées en parallèle vers la sortie (A1 ... n) concernée.

5. Procédé selon la revendication 4,
**caractérisé en ce que** les données utiles (nd) commutées en parallèle vers une sortie (A1 ... n) de l'unité de commutation (VE) font l'objet d'une conversion parallèle / série.

6. Procédé selon l'une des revendications 1 à 5,
**caractérisé en ce que**, en fonction du résultat de l'analyse, les données de commutation (VPI, VCI) saisies sont commutées, modifiées ou non, indépendamment des données utiles (nd) respectives, vers l'au moins une sortie de destination (A1 ... n) de l'unité de commutation (VE) via le système de bus (DB) et y sont introduites dans un en-tête de paquet (kd) de nouveau ajouté à l'information utile (nd) respective présente en série ou en parallèle.

7. Procédé selon la revendication 6,
**caractérisé en ce que** les données de commutation (VPI, VCI) font l'objet d'une conversion série / parallèle et sont commutées en parallèle vers l'au moins une sortie de destination (A1 ... n) concernée.

8. Procédé selon l'une des revendications précédentes,
**caractérisé en ce que** les flux de données (ds) orientés paquets qui arrivent à une entrée (E) de l'unité de commutation (VE) sont constitués selon le mode de transfert asynchrone (ATM) et les données de commutation ATM (VPI, VCI) sont insérées dans les en-têtes de cellules (kd) des cellules ATM (AZ), les données de commutation ATM (VPI, VCI) se composant respectivement d'un identificateur de chemin virtuel (VPI) et d'un identificateur de canal virtuel VCI.

9. Procédé selon la revendication 8,
**caractérisé en ce qu'**une cellule ATM (AZ) comporte 48 octets de données utiles (nd) et un en-tête de cellule ATM (kd) comprenant 5 octets de données d'en-tête de cellule ATM, un octet des données d'en-tête de cellule ATM étant prévu en tant qu'information de correction d'erreurs (hec) pour l'identification et la correction d'erreurs de l'en-tête de cellule ATM (kd) resp. des données d'en-tête de cellule ATM.

10. Procédé selon la revendication 9,
**caractérisé en ce que** les en-têtes de cellules ATM (kd) des cellules ATM (AZ) arrivant à l'entrée (E1 ... n) de l'unité de commutation (VE) sont évalués pour ce qui est des informations de correction d'erreurs (hec) contenues dans les données d'en-tête de cellule ATM et, en fonction du résultat de l'évaluation,
- les données de commutation ATM (VPI, VCI) contenues dans les en-têtes de cellules ATM (kd) sont évaluées ou
- les données d'en-tête de cellule ATM contenues dans les en-têtes de cellules ATM (kd) sont corrigées au moyen des informations de correction d'erreurs (hec) ou
- les cellules ATM (AZ) sont rejetées.

11. Procédé selon l'une des revendications précédentes,
**caractérisé en ce que** le système de bus (DB) est réalisé par un système de bus parallèle avec une largeur de mot de 32 bits ou égale à un multiple de ce nombre.

12. Procédé selon l'une des revendications 9 à 11,
**caractérisé en ce que**
- l'information de correction d'erreurs (hec) comprenant 1 octet est retirée des en-têtes de cellules ATM (kd) resp. des données d'en-tête de cellule ATM et
- les données d'en-tête de cellule ATM, à l'exclusion de l'information de correction d'erreurs (hec) comprenant 1 octet, sont commutées, modifiées ou non, par l'intermédiaire du système de bus parallèle (DB), vers l'au moins une sortie (A1 ... n) concernée et introduites dans un en-tête de cellule ATM (kd) et
- une information de correction d'erreurs (hec) adaptée en conséquence est insérée dans les données d'en-tête de cellule ATM resp. dans l'en-tête de cellule ATM (kd).

13. Unité de commutation (VE) pour commuter des données utiles (nd) arrivant à au moins une entrée (E1 ... n) et contenues dans des flux de données (ds) orientés paquets vers au moins une sortie de destination (A1 ... n) selon des données de commutation (VPI, VCI) contenues dans des en-têtes de paquets (kd) des flux de données (ds), comprenant
- des unités de raccordement d'abonné (TAE1 ... n) réalisant respectivement une entrée et une sortie (E1 ... n, A1 ... n),
- un système de bus (DB) connecté aux unités de raccordement d'abonné (TAE1 ... n) et,
- dans les unités de raccordement d'abonné (TAE1 ...n) comprennent,
-- respectivement une unité de traitement de champs d'en-tête (KST) pour détecter des paquets (AZ) y compris les données de commutation (VPI, VCI) à partir du flux de données (ds) orienté paquets qui arrive à l'au moins une entrée (E1 ... n) et
-- respectivement au moins une mémoire temporaire (MEM) affectée à l'entrée (E1 ... n) et à la sortie (A1 ... n) pour la mise en mémoire temporaire séparée des données utiles (nd) arrivant et commutées et de l'en-tête de paquet (kd),
- un dispositif de commande (ZST) connecté aux unités de raccordement d'abonné (TAE1 ... n) et servant à évaluer les données de commutation (VPI, VCI) mises en mémoire temporairement ainsi qu'à activer une mémoire temporaire (MEM), déterminée par le résultat de l'évaluation, d'au moins une sortie de destination (A1 ... n), étant prévu dans l'unité de commutation (VE),
**caractérisée en ce que**
- le dispositif de commande est réalisé de manière telle que seules sont commutées, en fonction du résultat de l'évaluation, les données utiles (nd) mises en mémoire temporairement, par l'intermédiaire du système de bus (DB) vers l'au moins une sortie de destination (A1 ... n).

14. Unité de commutation selon la revendication 13,
**caractérisée en ce que** le dispositif de commande (ZST) est connecté aux unités de raccordement d'abonné (TAE1 ... n) respectivement par l'intermédiaire d'une ligne de connexion séparée ou par l'intermédiaire du système de bus (DB).

15. Unité de commutation selon la revendication 13 ou 14,
**caractérisée en ce que** d'autres moyens d'enregistrement (VS) pour enregistrer l'affectation de données de commutation (VPI, VCI) à au moins une sortie (A1 ... n) sont affectés au dispositif de commande (ZST), l'au moins une sortie de destination (A1 ... n) étant déterminée à l'aide des autres moyens d'enregistrement (VS).

16. Unité de commutation selon l'une des revendications 13 à 15,
**caractérisée en ce que** des moyens de conversion (SPW) pour conversion série / parallèle d'au moins le flux de données (ds) série entrant orienté paquets sont situés dans l'unité de raccordement d'abonné (TAE1 ... n), les données utiles converties (nd) étant enregistrées en parallèle dans la mémoire temporaire (MEM) de l'unité de raccordement d'abonné (TAE1 ... n).

17. Unité de commutation selon la revendication 16,
**caractérisée en ce que** la largeur de mot du moyen de conversion (SPW) ainsi que la largeur de mot des mémoires temporaires (MEM) sont adaptées à la largeur de mot du système de bus (DB) réalisé en tant que système de bus parallèle, la largeur de mot étant de 32 bits ou un multiple de ce nombre.

18. Unité de commutation selon la revendication 16 ou 17,
**caractérisée en ce que**, dans l'unité de commutation (VE), des moyens de conversion (PSW) pour la conversion parallèle / série des données utiles (nd) commutées en parallèle sont affectés à chaque sortie (A1 ... n).

19. Unité de commutation selon l'une des revendications 13 à 18,
**caractérisée en ce que**
- sont affectés, à l'unité de commande (ZST), des moyens (MST) pour modifier, en fonction du résultat de l'évaluation, les données de commutation saisies (VPI, VCI) et d'autres moyens pour commuter les données de commutation (VPI', VCI'), modifiées ou non, en fonction des données utiles (nd) respectives, par l'intermédiaire du système de bus (DN) vers l'au moins une sortie de destination (A1 ... n) de l'unité de commutation (VE) et
- sont affectés, à chaque sortie (A1 ... n), d'autres moyens (KST) pour ajouter un en-tête de paquet (kd') aux données utiles (nd) respectives, présentes en série ou en parallèle, et pour introduire les données de commutation (VPI', VCI') commutées dans l'en-tête de paquet (kd') ajouté.
